# FASCICULE DE BREVET EUROPEEN

(11) **EP 0 743 361 B1**
(45) Date de publication et mention de la délivrance du brevet: **24.10.2001**
(21) Numéro de dépôt: 96401017.7
(22) Date de dépôt: 10.05.1996
(51) Int. Cl.: C12C 1/02

(54) **Procédé de maltage d'orge et malt amélioré ainsi obtenu**
Verfahren zum Mälzen von Gerste und das dabei erhaltenes verbessertes Malz
Process for malting barley and the improved malt obtained thereby

(30) Priorité: 16.05.1995 FR 9505765
(43) Date de publication de la demande: 20.11.1996
(73) Titulaire: Brasseries KRONENBOURG Société dite : S.A., 67037 Strasbourg Cedex 2 (FR)
(72) Inventeur: Zimmerman, Didier, 67000 Strasbourg (FR); Gendre, François, 67000 Strasbourg (FR); Carnielo, Michel, 67370 Griesheim-sur-Souffel (FR)
(74) Mandataire: Jacquard, Philippe Jean-Luc

(56) Documents cités:
- FR-A- 1 360 637
- US-A- 2 698 275
- JOURNAL OF THE INSTITUTE OF BREWING, vol. 99, no. 1, LONDON GB, pages 85-89, XP002013513 DORAN, P.J. & BRIGGS, D.E.: "The use of chemical agents to overcome dormancy in malting barley."
- DATABASE WPI Section Ch, Week 8026 Derwent Publications Ltd., London, GB; Class D13, AN 80-45637c XP002013516 & JP-A-55 064 772 (KUROIWA, T.) , 16 Mai 1980
- JOURNAL OF THE INSTITUTE OF BREWING, vol. 92, LONDON GB, pages 73-80, XP002013514 WAINWRIGHT, T.: "Nitrosamines in malt and beer."
- JOURNAL OF THE INSTITUTE OF BREWING, vol. 78, no. 1, LONDON GB, pages 81-83, XP002013515 PALMER, G.H. ET AL.: "Combined acidulation and gibberellic acid treatment in the accelerated malting of abraded barley."

## Description

La présente invention a pour objet un procédé de maltage d'orge, c'est-à-dire un procédé comportant une étape de trempe, une étape de germination et une étape de touraillage, permettant d'obtenir une faible teneur en Nitrosodiméthylamine (NDMA).

Au cours des années 80, les brasseurs ont pris en compte la présence dans la bière de NDMA, une substance présumée cancérigène et mutagène pour l'homme. Le NDMA, présent dans le malt, semble provenir de la réaction d'amines secondaires et tertiaires synthétisées par l'orge au cours du maltage avec des formes d'oxydes d'azote (NOx) présent dans l'air ambiant .

Selon les auteurs, différents types d'amines seraient les précurseurs majeurs du NDMA.

T. WAINWRIGHT et al, en 1986, à la suite de nombreux travaux antérieurs et dans un article de synthèse intitulé "The chemistry of nitrosamine formation : relevance to malting and brewing" dans JOURNAL INST. BREW. , , Janv.-Fev 1986, vol.92, p.61, suggère que l'hordénine est le précurseur majeur du NDMA et attribue un rôle secondaire aux autres amines de type Diméthylamine (DMA), Sarcosine et Gramine.

En 1985, des travaux publiés par M.M. MANGINO & R.S. SCANLAN et intitulés "Nitrosation of the Alkanoïds Hordenine and Gramine, Potential precursors of N-Nitrosodimethylamine in Barley Malt" dans JOURNAL AGRIC. FOOD CHEM. 1985, vol.33, p.705, mettent en évidence le rôle important de la Gramine du malt dans les phénomènes de formation de NDMA en raison de sa très grande susceptibilité à être nitrosé par les agents NOₓ de l'air.

Enfin, plusieurs auteurs suggèrent que le principal précurseur du NDMA du malt est le Diméthylamine (DMA), une amine secondaire synthétisée dans les radicelles de l'orge pendant le maltage. Des travaux publiés en 1981 par S. SAKUMA et al dans un article intitulé "Formation of N-Nitrosodimethylamine during malt kilning" publié dans REPORTS RES. LAB. KIRIN BREWERY CO de 1981, vol.24, p.20, indiquent qu'il existe une relation directe entre la quantité de NDMA produit dans le malt et la quantité de DMA du malt vert et de NOₓ de l'air. Plus récemment, L. J. YOO dans un article de 1992 intitulé "Precursors of Nitrosodimethylamine in Malted Barley. Determination of Dimethylamine " dans JOURNAL AGRIC. FOOD CHEM., vol.40, p.2224, confirme, sur la base des quantités d'amines mesurées sur malt et la production de NDMA après nitrosation, que le DMA est le principal précurseur du NDMA et que sa concentration dans le malt vert permet de déduire la quantité de NDMA potentiellement produite au touraillage. Parallèlement, dans cet article et dans un article attenant à celui-ci, de B. POOCHAROEN et al, intitulé "Precursors of Nitrosodimethylamine in Malted Barley. Determination of Hordenine and Gramine " publié dans Journal AGRIC. FOOD CHEM., vol.40, p.2220, certains de ces auteurs mettent fortement en doute le rôle de l'Hordénine et de la Gramine dans la production de NDMA dans le malt , ce qui suggère, d'après les données les plus récentes, que le principal précurseur du NDMA est le Diméthylamine (DMA) produit dans les radicelles au cours de la germination de l'orge.

Actuellement, le procédé de réduction du taux de NDMA couramment utilisé à l'échelle industrielle repose sur l'addition de soufre au touraillage, ainsi que sur la mise en oeuvre de brûleurs à faible taux de NO₂ ou bien de brûleurs à chauffage indirect, différentes options explicitées dans un article de W. FLAD intitulé "Minimizing nitrosamine formation during malt kilning" paru dans le numéro de Novembre 1989 de BRAUWELT INTERNATIONAL.

Cependant, un tel procédé, outre le fait qu'il ne donne pas satisfaction dans tous les cas, en ce sens que certains lots industriels de malt traités par ce procédé contiennent encore des doses inacceptables de NDMA, est également sujet à caution en raison du fait que l'emploi de soufre entraîne l'émission d'oxyde de soufre lors de sa combustion. L'emploi de soufre en malterie pourrait être remis en question à moyen terme en raison de l'évolution des normes de protection de l'environnement.

Or, dans l'état actuel des connaissances, il n'existe pas de procédé utilisable industriellement qui permette d'éviter l'emploi de soufre et qui puisse conduire à un faible taux de NDMA sans présenter par ailleurs d'inconvénient important quant à la qualité du malt obtenu et/ou quant à la mise en oeuvre industrielle proprement dite et/ou quant au rendement.

Certains procédés ont été proposés, qui mettent en oeuvre une addition d'un composé, en général un acide, après la germination, et immédiatement avant le touraillage, ou bien pendant le touraillage.

L'article de William J. OLSON intitulé "Control of Malt N-Nitrosodimethylamine in Direct Kilning Without Use of Sulfur Oxides" publié dans le "MBAA TECHNICAL QUARTERLY", vol. 19, No.2, 1982 (p.63 à 67) envisage l'addition d'acide phosphorique et de sucre (dextrose ou fructose) avant touraillage, ceci conduisant à des taux de NDMA qui restent de l'ordre de 2 à 3 µg/kg, étant entendu que l'addition d'H₂PO₃ seul conduit à des malts présentant des taux de NDMA de 20 à 30 µg/kg, et l'addition de sucre seul conduit à des malts présentant des taux de NDMA de 5 à 8 µg/kg. Ce procédé donne des résultats variables ainsi que le montre l'article de W.J.W. LLOYD et S.J. HUTCHINGS, intitulé "Suppression of NDMA formation in malt" et paru dans le compte-rendu de l'EBC Congress 1983 (p.55-62). Enfin, l'addition d'acide phosphorique avant touraillage génère de mauvaises odeurs lors du touraillage qui rendent très problématique l'utilisation industrielle du procédé.

Un autre procédé d'acidification immédiatement avant touraillage est décrit dans l'article de W.A. HARDWICK et al intitulé "N-Nitrosodimethylamine in Malt Beverages - Anticipatory Action by the Brewing Industry" publié dans "Regulatory Toxicology and Pharmacology 2 (p. 38 à 66), Academic Press Inc. 1982. Il consiste en une acidification de la surface du grain à un pH de l'ordre de 2,5 (p.54), de manière à diminuer la quantité de NDMA. Le phénomène mis en oeuvre consiste à "geler" l'hordénine, un des précurseurs potentiels du NDMA, qui est dans ces conditions sous sa forme protonée insusceptible ou peu susceptible de donner lieu à formation de NDMA en présence de NOₓ. Cette technique n'a, semble-t-il, pas donné lieu à des applications industrielles, pour les raisons exposées dans l'article de P.A. BROOKES, intitulé "The effects of Nitrosodimethylamine Palliatives on Malt Properties" et publié dans le Journal of Inst. Brew., 1982, vol. 88, p.256-260, à savoir de problèmes importants de manipulation et de sécurité que poserait une utilisation à l'échelle industrielle.

Un autre moyen connu de diminuer la quantité d'hordénine est de ralentir la germination.

Un tel ralentissement peut être obtenu, selon l'Art antérieur, par addition de persulfate d'ammonium ou de NO₂ après la trempe et avant la germination, ou bien par une acidification à la trempe permettant de limiter la croissance du germe, ou bien encore par le choix de conditions (humidité, température, temps de germination) permettant de limiter la croissance du germe.

L'addition de persulfate d'ammonium ou de bromate lors du maltage est envisagée dans l'article de T. WAINWRIGHT et D.D. O'FARRELL intitulé "Ammonium Persulphate in Malting : Control of NDMA and Increased Yield of Malt Extract" paru dans le Journal of Inst. Brew., Mai-Juin 1986, vol.92, p. 232-238. Ce procédé, qui n'a pas été utilisé à l'échelle industrielle, nécessite l'addition d'acide gibbérellique.

La mise en oeuvre d'une acidification de l'eau de trempe, pour diminuer la croissance de l'embryon est connue des trois articles suivants de T. WAINWRIGHT :
- "Nitrosodimethylamine : formation and palliative measures" paru dans Journal Inst. Brew., 1981, vol. 87, p.264-265 ;
- "N-Nitrosodimethylamine Precursors in Malt" p.71-80 (précité) ;
- "Nitrosamines in Malt and Beer" paru dans Journal Inst. Brew. (1986), vol.92, p.73 à 80.

Il résulte de ces articles que toute action, notamment une acidification appropriée lors de la trempe, qui limite la croissance de l'embryon, réduit la quantité d'hordénine, précurseur potentiel de NDMA principalement formé dans ce tissu, d'un facteur d'environ 10, et par conséquent la quantité de NDMA produit dans le malt fini.

Cependant, le plus récent de ces trois articles ("Nitrosamines in Malt and Beer"), montre (p.76, vol.1, § 3 et 4) que tous les traitements qui peuvent être envisagés pour diminuer la croissance de l'embryon, ont des effets négatifs sur la qualité du malt et ne sont pas directement utilisables à l'échelle industrielle.

On notera, à titre documentaire, que des procédés non utilisés industriellement, mettant en oeuvre une inactivation de l'embryon ont été suggérés par les deux articles suivants :
- G.H PALMER et al. "Combined acidulation and gibberellic acid treatment in the accelerated malting of abraded barley" publié dans J. Ins. Brew, vol. 78 (1972), p.81-83 ;
- D. CRABB et G.M. PALMER "The Production and Brewing Value of Malt made without Embryo Growth" paru dans ASBC Proceedings, 1972, p. 36 à 38.

Ces articles ne concernent pas le problème du NDMA, ne serait-ce qu'à cause de leur date de publication antérieure à l'identification des problèmes dus au NDMA. Leur but est de tuer l'embryon afin que celui-ci ne développe pas de radicelles et de plumules qui conduiraient à une perte d'extrait. Le procédé implique l'addition d'acide gibbérellique. Il est nécessaire de partir d'orge abrasé en raison du fait que le péricarpe de l'orge germé est imperméable à l'acide gibbérellique.

Le premier article donne comme exemple l'addition à de l'orge abrasé de H₂SO₄, 0,006N à la première trempe et 0,01N à la seconde trempe, ainsi que d'acide gibbérellique (0,5 à 0,1 ppm) à la fin de chaque trempe. Ceci a pour effet d'inactiver l'embryon, de réduire la taille des radicelles (de plus de 70%), d'augmenter la quantité des protéines solubles, de stimuler la couche aleurone, et d'augmenter la quantité d'extrait en raison de l'absence de croissance de l'embryon et des radicelles.

Le deuxième article concerne la destruction de l'embryon d'orge abrasé à l'aide d'acide (non spécifié) à 0,02%, avec addition d'acide gibbérellique permettant de suppléer à celui qui aurait été produit lors d'une germination normale.

Ces procédés qui nécessitent une étape d'abrasion de l'orge, une addition d'acide gibbérellique, et qui en outre conduisent à une augmentation de la quantité des protéines solubles, n'ont pas non plus donné lieu à des utilisations industrielles.

Le Brevet français FR-1 360 637 (STAUFFER CHEMICAL COMPANY) concerne un procédé de maltage fournissant un malt d'une couleur plus vive et séduisante avec diminution du développement des radicelles au cours de la germination. Il met en oeuvre une trempe acide à raison de typiquement 1 litre d'eau de trempe pour 100 grammes d'orge, le pH initial de la trempe variant entre 1,7 et 2,4. De tels rapports volumiques entre l'eau de trempe et la quantité d'orge ont pour conséquence que le pH de l'eau de trempe reste longtemps égal au pH initial. L'orge restant très longtemps à un pH faible (< 2,3), il en résulte un ralentissement de la germination, ce qui entraîne les inconvénients déjà mentionnés.

L'article de DORAN et BRIGGS, J. Inst. Brew. Vol. 99, n° 1, pages 85-89 intitulé "The use of chemical agents to overcome dormancy in malting barley" propose une technique visant à "réveiller" l'orge dormant en stimulant ses propriétés de germination. Ce procédé concerne un cas très particulier et son mécanisme est le contraire de celui mis en oeuvre dans le Brevet FR 1 360 637.

Il résulte de ce qui précède qu'il n'est pas actuellement connu de procédé utilisable à l'échelle industrielle sans inconvénient plus ou moins important, et qui permettrait d'obtenir du malt à faible taux de NDMA, sans addition de soufre lors du touraillage.

L'invention a pour objet de résoudre ce problème et concerne donc un procédé utilisable à l'échelle industrielle et permettant notamment d'obtenir un malt à faible taux de NDMA.

L'idée de base de l'invention est qu'il est possible de contrôler l'acidification lors de la trempe, de telle sorte que la germination ne soit pas du tout ou ne soit que très peu modifiée, tout en agissant sur le mécanisme qui conduit, après touraillage à une faible quantité de NDMA, et ce sans affecter les propriétés du malt, ni compliquer la mise en oeuvre industrielle, ni diminuer le rendement.

Le procédé selon l'invention est ainsi caractérisé en ce que l'étape de trempe comporte au moins une sous-étape de trempe acide qui s'effectue à un pH qui, après stabilisation, est compris entre 3,5 et 4,6 à température ambiante, le rapport entre le volume de l'eau de trempe et la quantité d'orge étant choisi pour que l'activité du grain lors de la germination ne soit pas modifiée, toutes choses égales par ailleurs. Ceci permet de tenir compte de l'effet tampon de l'orge.

Avec ces valeurs de pH, la germination de l'orge n'est que peu ou pas affectée, alors que par exemple un pH qui, après stabilisation, serait égal à 3 conduirait à une modification notable de la germination et donc de la qualité du malt. Le malt obtenu selon l'invention présente, après touraillage, un faible taux de NDMA, par exemple inférieur à 2µg/kg et de préférence inférieur à 1µg/kg.

Selon un mode de réalisation préféré, ledit pH stabilisé est compris entre 3,8 et 4,6, la valeur préférée étant égale à 4,5. En effet, selon l'invention, les résultats obtenus sont pratiquement les mêmes par exemple pour des pH égaux à 3,5 et à 4,5 et on a donc intérêt à travailler à la valeur la plus élevée, qui correspond à l'addition de la plus faible quantité d'acide à un même volume d'eau de trempe.

L'acide peut être de l'acide chlorhydrique et/ou bien de l'acide phosphorique.

Ledit rapport entre le volume de l'eau de trempe et la quantité d'orge est avantageusement compris entre 0,8 l et 1,2 l par kg d'orge, et de préférence égal à 1 l d'eau de trempe par kg d'orge.

Au moins une sous-étape de trempe a une durée avantageusement comprise entre 4 et 6 heures.

Dans tous les cas on observe une diminution des protéines solubles (diminution de l'indice Kolbach), mais dans le cas de l'acide phosphorique, un avantage supplémentaire est un abaissement notable de la viscosité du moût, qui est dû essentiellement à la diminution du taux de β-glucanes solubles dans le malt. On remarquera que l'acide phosphorique étant employé à froid lors de la trempe, le problème des odeurs et des difficultés de manipulation qui a été évoqué ci-dessus dans le cas de l'addition d'acide phosphorique lors du touraillage, ne se pose plus.

De l'acide peut être ajouté à l'eau de trempe au cours de chacune des sous-étapes de trempe.

Selon une variante préférée, l'étape de trempe comporte trois sous-étapes et de l'acide est ajouté à l'eau de trempe au cours de la première et de la deuxième de ces sous-étapes.

L'invention concerne également un malt obtenu avec stimulation sensible de la germination et qui est caractérisé en ce qu'il présente un extrait compris entre 81 % et 82 % de matière sèche (MS), un taux de protéines solubles compris entre 4 et 5 %, une viscosité comprise entre 1,4 et 1,5 mPas, une homogénéité de modification > 72 %, un taux de NDMA < 10⁻⁹, et éventuellement un taux de β-glucanes solubles < 200 mg.

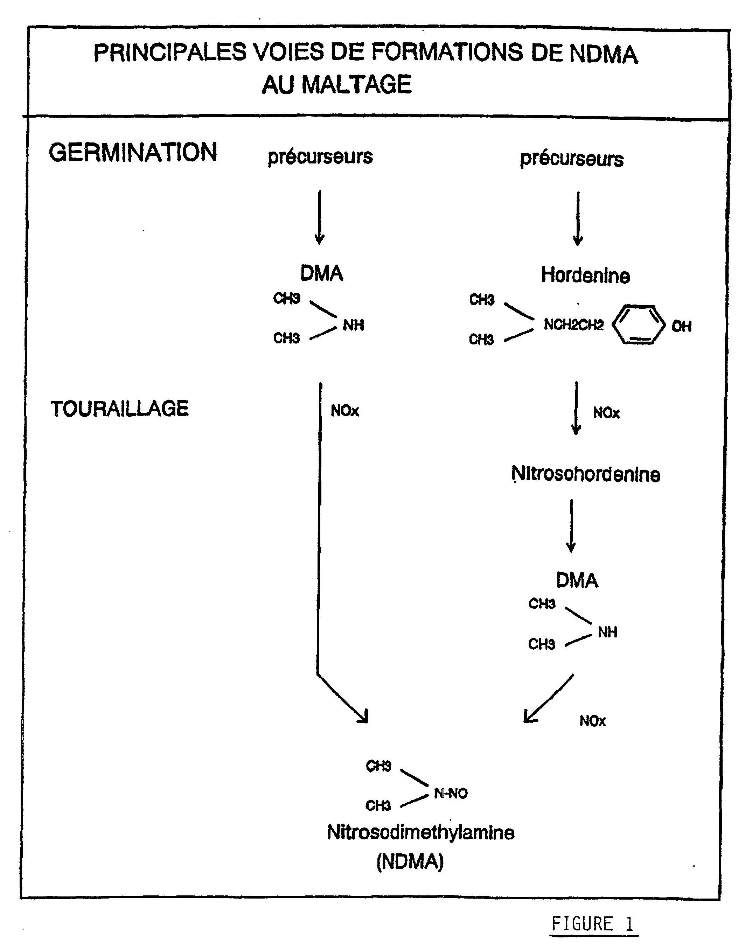

D'autres caractéristiques et avantages de l'invention apparaîtront mieux à la lecture de la description qui va suivre, en liaison avec le dessin ci-annexé dans lequel la figure 1 reprend les deux hypothèses majeures de formation du NDMA dans le malt publiées dans la littérature, en l'occurrence la formation de NDMA à partir de DMA produit au cours de la germination et à partir de DMA formé par nitrosation successive d'hordénine et de nitrosohordénine au cours du touraillage.

La figure 2 illustre de manière comparative l'évolution du pH en cours de trempe, selon le Brevet FR-1 360 637 et selon l'invention.

La figure 3 illustre de manière comparative la filtrabilité des malts essai et témoin selon les ESSAIS 8 et 9 des ESSAIS II.

Les tableaux 1 et 2 représentent les résultats des ESSAIS I ci-dessous.

Les tableaux 3 et 4 représentent les résultats des ESSAIS II ci-dessous. Le tableau 4 illustre l'influence sur la qualité du malt de la stimulation sensible en germination après trempe acide.

Le tableau 5 représente les résultats des ESSAIS III ci-dessous.

L'invention a été mise en oeuvre dans plusieurs séries d'essais conduits en micromalterie ou bien à l'échelle industrielle.

### ESSAIS I : COMPARAISON HCl/H₃PO₄

### Variétés d'orge :

Trois variétés brassicoles ont été éprouvées à l'échelle du micromaltage. Toutes sont des variétés de Printemps (ALEXIS, VODKA et NOMAD).

### Procédure de micromaltage :

### La trempe :

L'orge stockée à 13°C est soumise à 3 trempes successives, entrecoupées de 2 périodes d'aération du grain.

| | | |
|---|---|---|
| 1ère trempe | 6 heures | 13°C |
| 1ère aération | 14 heures | 25°C |
| 2ème trempe | 5 heures | 14°C |
| 2ème aération | 13 heures | 20°C |
| 3ème trempe | 2 heures | 16°C |

Pour les essais de trempe acide, l'acide chlorhydrique (HCl) et l'acide phosphorique (H₃PO₄) sont ajoutés aux 2 premières trempes :
- Essai HCL (37%), pH 4,5 après stabilisation
- Essai HCL (37%), pH 3,5 après stabilisation
- Essai H₃PO₄ (85%), pH 4,5 après stabilisation
- Essai H₃PO₄ (85%), pH 3,5 après stabilisation

La trempe s'effectue avec une proportion de 1 litre d'eau de trempe environ par kilogramme d'orge.

### La germination :

Cette étape qui dure 96 heures peut être subdivisée en trois stades distincts :

| | | |
|---|---|---|
| 1ère phase | 14 heures | 20°C |
| 2ème phase | 2 heures | 18°C |
| 3ème phase | 80 heures | 16°C |

### Le touraillage :

L'orge germée est séchée en micromalterie par une augmentation progressive de la température.

| | | |
|---|---|---|
| 1ère phase | 3 heures | 62°C |
| 2ème phase | 2 heures | 65°C |
| 3ème phase | 2 heures | 68°C |
| 4ème phase | 2 heures | 73°C |
| 5ème phase | 1 heure | 78°C |
| 6ème phase | 2 heures | 80°C |
| 7ème phase | 6 heures | 83°C |

Après touraillage et avant stockage du malt, les radicelles sont séparées du grain par chocs mécaniques.

### Touraillage à l'échelle industrielle :

Une partie du malt vert de la variété ALEXIS a été récoltée en micromalterie et séchée à l'échelle industrielle sans brûler de soufre (SO₂) de manière à favoriser la formation de NDMA à partir des précurseurs présents dans le malt vert.

Le malt vert est séché au moyen d'un chauffage direct de type à faible teneur en NOₓ sur deux plateaux circulaires.

La première étape est réalisée sur le plateau supérieur de touraille pendant une durée de 20 heures. La température initiale de 55°C est amenée à 68-70°C pendant cette période, ce qui a pour effet d'amener l'humidité du grain de 42% à 10%.

La seconde étape est réalisée sur le plateau inférieur. Celle-ci est constituée de 3 étapes. Une montée progressive de la température pendant 12 heures jusqu'à 75°C, un coup de chauffe à 80°C pendant 4 heures, puis une étape de refroidissement du grain par ventilation pendant 4 heures. Pendant cette seconde étape, l'humidité du grain chute de 10 à 4%.

### Analyse des malts :

### Paramètres classiques :

Les principaux critères de qualité du malt (extrait, viscosité, indice Kolbach, pouvoir diastasique, pH, β-glucanes solubles) ont été mesurés par des méthodes décrites dans Analytica-EBC. Les malts séchés à l'échelle de la micromalterie ont été analysés à ce titre.

### Dosage des Nitrosodiméthylamines (NDMA) :

Les taux de NDMA ont été mesurés sur les malts séchés en touraille industrielle et après séparation des radicelles.

Les NDMA sont obtenus par extraction de 15g de malt dans 100 ml d'eau distillée à 50°C pendant une heure sous agitation modérée. Après extraction par le dichlorométhane sur un tube de type "Chemelut", l'extrait est concentré au Dichlorométhane (DCM) à 0,5 ml et 10 µl sont injectés dans le système CPG/TEA ("Thermal Energy Analyser").

La teneur en NDMA est calculée par rapport à un étalonnage réalisé sur un échantillon de malt contenant des quantités croissantes de NDMA.

Dans les analyses, le nitrosodipropylamine (NDPA) est ajouté comme étalon interne.

### RESULTATS

### Taux de NDMA du malt (Tableau 1) :

Quels que soient l'acide employé (HCl ou H₃PO₄) et l'acidité, les taux de NDMA produits lors du touraillage des malts verts (ALEXIS) sont plus faibles que ceux du témoin non traité : les valeurs de NDMA sur malt fini sont inférieures d'un facteur de plus de 2.

### Protéines solubles (Tableau 2) :

Le taux de protéines solubles (indice Kolbach) des essais est inférieur aux valeurs du témoin, quels que soient la variété d'orge considérée, le pH et l'acide employé.

### Taux de β-glucanes solubles (Tableau 2) :

L'acidification de l'eau de trempe entraîne une diminution des β-glucanes solubles du malt. Ce phénomène est particulièrement significatif lors de l'emploi de H₃PO₄ qui permet une réduction de 15 à 50% des β-glucanes solubles en fonction de la variété.

### Viscosité (Tableau 2) :

La chute de viscosité est significative dans tous les cas utilisant de l'acide phosphorique.

### pH du moût (Tableau 2) :

L'acidification au maltage induit une faible chute de pH (0,2-0,1 point de pH) du moût fabriqué à partir des malts.

### Pouvoir diastasique (Tableau 2) :

Le pouvoir diastasique est influencé par le type d'acide et l'acidité sans que l'on puisse dicter de règles générales, car ce phénomène est variable d'une variété à l'autre.

Les autres critères de qualité du malt analysés restent globalement inchangés.

### CONCLUSION

Cette étude montre que la diminution de production de NDMA dans le malt par acidification de l'eau de trempe n'est pas limitée à l'emploi d'acide chlorhydrique (HCl). L'utilisation d'acide phosphorique (H₃FO₄) à la trempe permet une diminution équivalente du taux de NDMA produit dans le malt fini.

D'autre part, une acidification plus forte (pH stabilisé égal à 3,5) n'apporte pas d'avantages par rapport à celle consistant à régler l'eau de trempe à un pH stabilisé de 4,5.

Considérant les autres facteurs de qualité du malt, notre étude met en évidence l'incidence positive de l'emploi de H₃PO₄ ou de HCl à la trempe sur la qualité globale du malt. Tout d'abord, on remarquera une diminution du taux de protéines solubles du malt (indice Kolbach).

Deuxièmement, la diminution des β-glucanes solubles et de la viscosité du malt est significative dans ces essais.

Les valeurs de pH du moût et les valeurs de pouvoir diastasique sont également influencées par l'acidification de l'eau de trempe.

Les constatations ci-dessus permettent d'envisager de pousser plus loin la germination de manière à obtenir un taux de protéines solubles (indice Kolbach) identique au témoin. Ceci devrait conduire à une augmentation de l'extrait du malt permettant des valeurs de rendement supérieures en salle à brasser. Dans ce cas, les autres paramètres du malt resteraient inchangés.

**TABLEAU 1**

| Echantillons | Taux de NDMA du malt 10⁻⁹ |
|---|---|
| Témoin | 1.8 |

| Essais | |
|---|---|
| HCl, pH 4.5 | 0,7 |
| HCl, pH 3.5 | 0,8 |
| | |
| H3PO4, pH 4.5 | 0,7 |
| H3PO4, pH 3.5 | 0,8 |

**TABLEAU 2**

| Variété | Paramètres | Unités | Témoin | HCl pH4.5 | HCl pH3.5 | H3PO4 pH4.5 | H3PO4 pH3.5 |
|---|---|---|---|---|---|---|---|
| ALEXIS | Humidité | % | 4.5 | 4.4 | 4.3 | 4.2 | 4.2 |
| | Extrait | %MS | 81.1 | 81.1 | 81.6 | 81.4 | 81.6 |
| | Protéines totales | %MS | 11.7 | 12 | 11.9 | 12.3 | 11.7 |
| | Protéines sol. | % | 4.6 | 4.1 | 4 | 4.3 | 4.2 |
| | Indice Kolbach | % | 39.3 | 34.2 | 33.6 | 35 | 35.9 |
| | Viscosité | m Pa.s | 1.63 | nd | nd | 1.49 | 1.53 |
| | B-glucanes sol. | mg/l | 357 | 358 | 333 | 249 | nd |
| | pH | | 5.89 | 5.69 | 5.82 | 5.75 | 5.81 |
| | Pouvoir Diast. (P.D.) | WK | 308 | 297 | 286 | 350 | 286 |
| NOMAD | Humidité | % | 4.4 | 4 | 4.4 | 4 | 4.1 |
| | Extrait | %MS | 82.5 | 82.5 | 82.4 | 83 | 82.7 |
| | Protéines totales | %MS | 9.8 | 9.9 | 10 | 9.8 | 9.9 |
| | Protéines sol. | % | 3.9 | 3.6 | 3.6 | 3.7 | 3.8 |
| | Indice Kolbach | % | 39.8 | 36.4 | 36 | 37.8 | 38.4 |
| | Viscosité | m Pa.s | 1.69 | nd | nd | 1.61 | 1.65 |
| | B-glucanes sol. | mg/l | 366 | 378 | 328 | 318 | nd |
| | pH | | 6.01 | 5.8 | 5.9 | 5.88 | 5.9 |
| | Pouvoir Diast. (P.D.) | WK | 140 | 96 | 97 | 96 | 82 |
| VODKA | Humidité | % | 4.5 | 4.4 | 4.8 | 4.2 | 4.3 |
| | Extrait | %MS | 81.4 | 81.6 | 81.8 | 81.8 | 81.9 |
| | Protéines totales | %MS | 10.4 | 10.6 | 10.5 | 11 | 10.6 |
| | Protéines sol. | % | 4.4 | 3.6 | 3.7 | 3.6 | 3.9 |
| | Indice Kolbach | % | 42.3 | 34 | 35.2 | 32.7 | 36.8 |
| | Viscosité | m Pa.s | 1.61 | 1.61 | 1.55 | 1.51 | 1.59 |
| | B-glucanes sol. | mg/l | 405 | 380 | 230 | 192 | nd |
| | pH | | 5.96 | 5.85 | 5.89 | 5.86 | 5.85 |
| | Pouvoir Diast. (P.D). | WK | 286 | 200 | 176 | 261 | 197 |
| nd : non déterminé | | | | | | | |

### ESSAIS II

### Variétés d'orge :

Quatre variétés brassicoles ont été éprouvées (ESSAIS 1 à 5) à l'échelle industrielle (200 tonnes de malt). Deux sont des variétés de Printemps (PRISMA et ALEXIS) ; deux des variétés d'hiver (CLARINE et PLAISANT).

### Procédure de maltage :

### La trempe :

L'orge stockée à 13°C est soumise à 3 trempes successives, entrecoupées de périodes d'aération du grain.

A 240 tonnes d'orge, sont additionnés 250m³ d'eau tempérée à 12°C. Après une période de 6 heures, l'eau de première trempe est évacuée et le grain est aéré pendant 11 heures par de l'air entrant à une température de 20°C. A ce stade, l'humidité des grains est comprise entre 26 et 28%.

Une deuxième trempe est réalisée avec un même volume d'eau pendant 3 heures, suivie d'une période d'aération de 8 heures à 16°C. A ce stade, l'humidité du grain est de 35-37%.

La dernière trempe correspond à une sous-eau de 2 heures suivie d'une aération de 3 à 4 heures à 16°C.

Au stade final de la trempe, les grains ont atteint une humidité de l'ordre de 40 à 42%.

Pour les essais (trempe acide), l'acide chlorhydrique est pompé à partir d'un réservoir de stockage et mélangé à l'eau alimentant la cuve de trempe.

### La germination :

Cette étape est réalisée pendant 5 jours dans des cases circulaires empilées dans une installation verticale de type "Tour de Maltage", et les grains sont retournés toutes les 8 heures de manière à homogénéiser la germination.

Au début de la germination, l'orge trempée est arrosée de manière à atteindre une humidité du grain de 43%. La température de l'air entrant est contrôlée à 15°C.

### Le touraillage :

L'orge germée (malt vert) est véhiculée de la case de germination vers la touraille où le malt vert est séché au moyen d'un chauffage direct de type à faible teneur en NOₓ, sur deux plateaux circulaires.

La première étape est réalisée sur un plateau supérieur de touraille pendant une durée de 20 heures. La température initiale de 55°C est amenée à 68-70°C pendant cette période, ce qui a pour effet d'amener l'humidité du grain de 42% à 10%.

La seconde étape est réalisée sur le plateau inférieur. Celle-ci est constituée de 3 étapes. Une montée progressive de la température pendant 12 heures jusqu'à 75°C, un coup de chauffe à 80°C pendant 4 heures, puis une étape de refroidissement du grain par ventilation pendant 4 heures. Pendant cette seconde étape, l'humidité du grain chute de 10 à 4%.

Dans le cas des témoins réalisés parallèlement à chaque essai, 75 kg de soufre sont brûlés pendant le touraillage.

Après touraillage et avant stockage du malt, les radicelles sont séparées du grain par chocs mécaniques. Le dosage des NDMA est effectué après séparation des radicelles.

### Dosage des Nitrosodiméthylamines:

Les NDMA sont obtenus par extraction de 15 g de malt dans 100 ml d'eau distillée à 50°C pendant une heure sous agitation modérée. Après extraction par le dichlorométhane sur un tube de type "Chemelut", l'extrait est concentré au DCM à 0,5 ml et 10 µl sont injectés dans le système CPG/TEA ("Thermal Energy Analyser").

La teneur en NDMA est calculée par rapport à un étalonnage réalisé sur un échantillon de malt contenant des quantités croissantes de NDMA.

Dans les analyses, le NDPA est ajouté comme étalon interne.

### RESULTATS :

Les observations réalisées à l'échelle de la micromalterie (ESSAIS I) sont validées à l'échelle industrielle (200 tonnes) : l'application d'acide à l'eau de trempe permet l'obtention de malt à faible teneur en nitrosamines, et de qualité identique au malt témoin traité avec du soufre (voir Tableau 3).

Ceci a été vérifié sur 5 essais industriels avec des qualités d'orge différentes (hiver/printemps).

L'application de différentes doses à différentes trempes montre que l'emploi d'acide aux deux premières trempes est suffisant. En terme de volume, on peut considérer qu'environ 500 litres d'acide ajoutés à l'eau de trempe permettent d'atteindre l'objectif.

A ces volumes d'acide, et avec environ 1 litre d'eau de trempe par kilogramme d'orge, les pH des eaux de trempe après homogénéisation et équilibre du pH, sont compris entre 3,8 et 4,1 à la première trempe, et entre 3,8 et 4,6 à la seconde trempe.

Un essai réalisé avec une faible dose d'acide (ESSAI 4 du TABLEAU 3) montre la nécessité d'une quantité minimale d'acide à la trempe en l'absence de soufre au touraillage. Avec une telle dose d'acide, les pH à l'équilibre de la première et de la seconde trempes sont respectivement de 5,1 et 4,8.

Parallèlement au critère "nitrosamines", les autres critères de qualité du malt ont été observés. Les valeurs de certains d'entre eux diffèrent entre l'essai et le témoin (voir TABLEAU 3).

Premièrement, la quantité d'anhydrides sulfureux est très faible dans les malts des essais par rapport au malt témoin. Ceci bien entendu est lié à l'absence d'application de soufre au touraillage dans le cas des essais.

Deuxièmement, le niveau des activités β-glucanase est toujours supérieur ou égal à 400 IRVU dans le cas des essais, alors qu'il est de l'ordre de 300 IRVU dans le cas de certains témoins. Ces chiffres donnent l'impression que l'acide "dope" la production d'hydrolases dans le cas où des conditions classiques de maltage ne permettraient pas au grain d'exprimer totalement son potentiel.

Parallèlement, on assiste à une diminution de l'indice Kolbach dans le cas des essais, ce qui se traduit par une plus faible quantité de protéines solubles.

Enfin, dans certains cas, on assiste à une diminution de la viscosité des malts des essais.

Les autres critères de qualité du malt restent globalement inchangés.

En raison de la confirmation lors de ces essais industriels d'une chute du taux de protéines solubles des essais, nous avons voulu vérifier dans le cadre des ESSAIS II s'il était possible de restaurer le taux de protéines solubles en stimulant sensiblement la germination de l'essai.

A ce titre, nous avons expérimenté (ESSAIS 6 à 9 répertoriés dans le tableau 4) deux options. L'option 1 (ESSAIS 6 et 7) consiste en une addition d'acide gibbérellique (30 mg/tonne) à l'essai en début de germination. L'option 2 (ESSAIS 8 et 9) consiste en un rallongement d'une durée de 5 heures de la dernière phase de sous-air de trempe de l'essai. Dans ce dernier cas (option 2), nous avons observé les caractéristiques du malt à 4 et 5 jours de germination. Dans les deux options, la quantité d'acide ajoutée correspond à celle utilisée pour l'essai 3 (400 et 150 litres). Les résultats sont consignés dans le tableau 4.

Les résultats de ces essais complémentaires confirment l'idée évoquée préalablement, à savoir une augmentation significative de l'extrait du malt lors du rétablissement de la valeur des protéines solubles par une stimulation sensible de la phase de germination. Cette augmentation se situe entre 0,4 et 1,3 point d'extrait selon l'essai considéré.

On constate également une diminution plus significative de la viscosité que celle observée dans les essais précédents. Cette différence de viscosité est liée à une meilleure dégradation des constituants des parois cellulaires par l'expression d'activités cytolytiques élevées. Par exemple, les taux de β-glucanes solubles des malts essais sont réduits par l'expression dans ces malts d'activités endocellulasique et glucanasique plus élevées que dans les malts témoins.

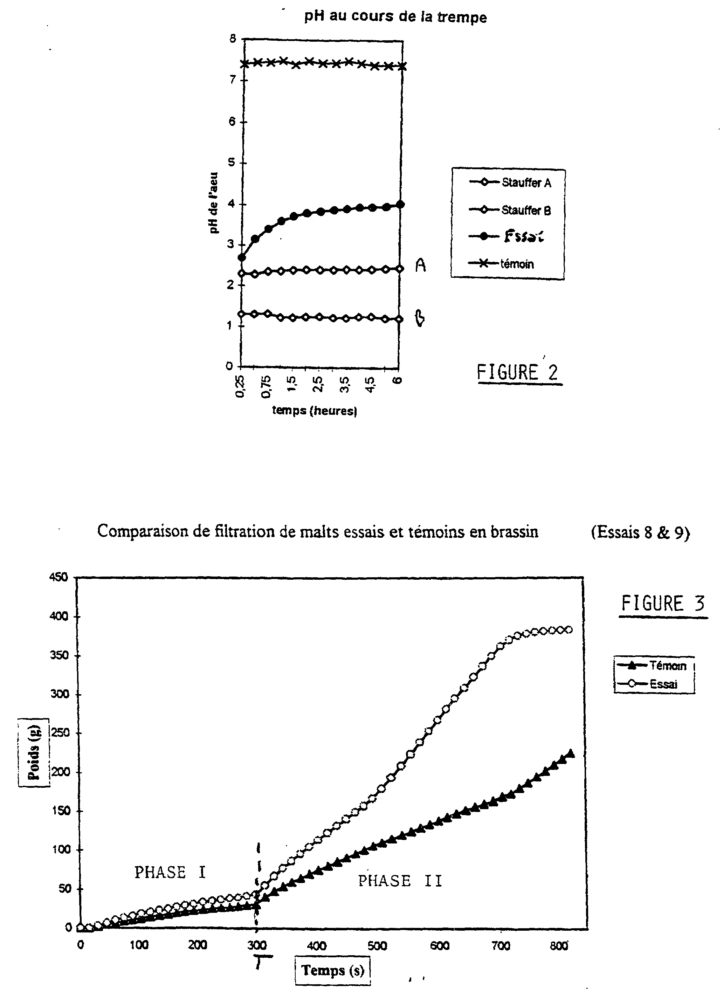

Cette caractéristique a une influence significative sur la qualité de filtration du moût dans le Brassin décrit par GRANDCLERC J. et al, 1988 dans "Simplification de la méthode de filtration du Brassin TEPRAL, description et méthode" publié dans la revue française BIOS n° 19, p. 88-92. Lorsque l'on compare un mélange 50/50 des malts essais IRANIS des ESSAIS 8 et 9 par rapport à un mélange 50/50 des malts témoins des ESSAIS 8 et 9, on observe une nette différence de comportement en filtration. Pendant les 300 premières secondes de l'essai de la figure 3 (PHASE I), la filtration est gravitaire, et au bout de T = 300 s, la filtration s'effectue sous une pression de 1 bar. La figure 3 illustre ce fait en montrant une nette amélioration de la vitesse de filtration dans le cas du mélange des essais, surtout dans la PHASE II, par rapport au mélange des malts témoins.

Parallèlement, on observe dans tous les cas une meilleure homogénéité de modification du malt. Enfin, les performances de qualité de malt lié à ce type de procédé de maltage s'illustrent de manière très significative à l'observation des malts produits en 4 jours de germination (Essai 8). L'adoption de la trempe acide permet de produire après 4 jours de germination un malt de qualité identique à celui produit en 5 jours dans des conditions de maltage standards.

D'autre part, les changements physiologiques liés à la trempe acide permettent de limiter la respiration du grain, ce qui conduit à améliorer le rendement du maltage de 1 point (%) environ.

### CONCLUSION

L'objectif de l'étude est atteint : à l'échelle industrielle l'emploi d'acide à la trempe permet de limiter la production de nitrosamines au maltage en absence de soufre au touraillage.

Les malts produits dans ces conditions sont conformes en terme de qualité, avec dans tous les cas une plus faible quantité d'anhydride sulfureux et un taux constant et élevé d'activité β-glucanasique.

Dans certains cas, ces malts se caractérisent également par un indice Kolbach plus faible et une viscosité plus faible.

Dans des essais de rétablissement du taux de protéines solubles en stimulant sensiblement la germination, nous avons constaté par rapport au témoin que, parallèlement à une maîtrise des NDMA, l'adoption de telles conditions permettait une augmentation significative de la valeur d'extrait du malt et une diminution importante des β-glucanes solubles et de la viscosité du moût correspondant. Ces observations à des taux de protéines solubles qui sont identiques à ceux qui sont mesurés sur le témoin mettent en évidence que le procédé de maltage revendiqué permet non seulement une maîtrise du taux de NDMA produit mais également la fabrication de malt de meilleure qualité globale.

### INFLUENCE DU RAPPORT ENTRE LE VOLUME D'EAU DE TREMPE ET LE VOLUME D'ORGE TRAITEE :

La figure 2 illustre la variation de la courbe de pH au cours des 6 premières heures de trempe. Les essais "STAUFFER A" et "STAUFFER B" correspondent aux conditions extrêmes du Brevet FR-1 360 637 (p. 2, colonne de gauche), à savoir une eau de trempe contenant 0,1 % d'acide pour l'essai A et 1 % d'acide pour l'essai B, et, dans les deux cas, 10 volumes d'eau pour 1 volume d'orge (soit un litre d'eau de trempe pour 100 g d'orge). L'essai selon l'invention correspond à une eau de trempe contenant 0,2 % d'acide, soit 400 1 d'acide pour 200 tonnes d'eau, pour un essai correspondant à 200 tonnes de grain.

Les valeurs de pH relevées au cours des trempes, sont données à la figure 2 et correspondent au tableau ci-après :

| T(h) | STAUFFER A | STAUFFER B | ESSAI | Témoin |
|---|---|---|---|---|
| 0,25 | 2,3 | 1,3 | 2,67 | 7,4 |
| 0,5 | 2,28 | 1,3 | 3,15 | 7,45 |
| 0,75 | 2,35 | 1,31 | 3,4 | 7,45 |
| 1 | 2,37 | 1,23 | 3,6 | 7,5 |
| 1,5 | 2,39 | 1,23 | 3,72 | 7,4 |
| 2 | 2,4 | 1,24 | 3,8 | 7,5 |
| 2,5 | 2,4 | 1,25 | 3,85 | 7,45 |
| 3 | 2,4 | 1,23 | 3,88 | 7,45 |
| 3,5 | 2,42 | 1,23 | 3,92 | 7,5 |
| 4 | 2,41 | 1,25 | 3,95 | 7,45 |
| 4,5 | 2,42 | 1,26 | 3,96 | 7,4 |
| 5 | 2,44 | 1,22 | 3,98 | 7,4 |
| 6 | 2,45 | 1,22 | 4,05 | 7,4 |

Dans les essais STAUFFER A et STAUFFER B, c'est l'eau additionnée d'acide qui impose son pH. Au cours des six premières heures de trempe, le pH reste respectivement inférieur à 2,5 et à 1,3. Dans l'essai TEPRAL, le pH de départ est égal à 2,67, mais il devient égal au bout d'une heure environ à 3,5. Au bout de six heures, il atteint la valeur finale de 4,05. On constate donc avec le rapport volume d'eau/poids du grain choisi dans l'essai un important effet tampon dû à l'orge, qui permet d'éviter que le grain ne soit maintenu trop longtemps à un pH trop bas. On évite ainsi de perturber la physiologie de l'activité du grain lors de la germination. Le pH varie peu pendant la majeure partie de la sous-étape de trempe.

**Tableau 3:**

| Incidence de la trempe acide sur la qualité globale du malt | | | | | | | | | | | |
|---|---|---|---|---|---|---|---|---|---|---|---|
| Parametres | | ESSAI 1 PRISMA | | ESSAI 2 ALEXIS | | ESSAI 3 ALEXIS | | ESSAI 4 CLARINE | | ESSAI 5 PLAISANT | |
| Vol. Hcl | unité | E | T | E | T | E | T | E | T | E | T |
| V1 | litre | 250 | 0 | 350 | 0 | 400 | 0 | 250 | 0 | 400 | 0 |
| V2 | litre | 250 | 0 | 170 | 0 | 150 | 0 | 125 | 0 | 150 | 0 |
| V3 | litre | 250 | 0 | 0 | 0 | 0 | 0 | 0 | 0 | 0 | 0 |

| Analyse du malt | | | | | | | | | | | |
|---|---|---|---|---|---|---|---|---|---|---|---|
| Extrait | %MS | 81.4 | 81.3 | 82.5 | 83.1 | 82.1 | 82.9 | 80.3 | 79.6 | 80.2 | 79.8 |
| Kolbach | % | 37.8 | 40.2 | 34.7 | 38.6 | 37.2 | 38.3 | 30.3 | 30.9 | 37.2 | 43.4 |
| Prot. sol. | % | 4.2 | 4.3 | 3.4 | 3.6 | 3.5 | 3.6 | 3.3 | 3.4 | 4.1 | 4.9 |
| Hartong 45 | % | 38.0 | 33.0 | 36.5 | 34.0 | 35.0 | 38.0 | 28.5 | 26.0 | 34.0 | 41.0 |
| P.D. | WK | 220 | 200 | 200 | 190 | 250 | 250 | 180 | 190 | 330 | 350 |
| Viscosité | m Pas | 1.46 | 1.46 | 1.59 | 1.65 | 1.51 | 1.58 | 1.58 | 1.60 | 1.51 | 1.52 |
| NDMA | ppb (10⁻⁹) | 0.5 | 0.5 | 0.5 | 0.8 | 0.9 | 0.5 | 1.7 | 0.8 | 1.4 | 1.2 |
| SO2 | ppm (10⁻⁶) | 7.0 | 27.0 | 6.0 | 10.0 | 3.0 | 22.0 | 3.0 | 7.0 | 2.0 | 32.0 |
| B-glucanes sol. | mg/l | 44 | 85 | 80 | 45 | 140 | 160 | 493 | 550 | 130 | 140 |
| B-glucanase | IRVU | 480 | 300 | 400 | 330 | 420 | 400 | 400 | 300 | 440 | 430 |
| E: Essai, T: témoin | | | | | | | | | | | |

**Tableau 4:**

| Incidence sur la qualité du malt de la stimulation sensible en germination après trempe acide | | | | | | | | | |
|---|---|---|---|---|---|---|---|---|---|
| Parametres | | ESSAI 6 PRISMA | | ESSAI 7 PRISMA | | ESSAI 8 IRANIS | | ESSAI 9 IRANIS | |
| Conditions de maltage | | Gib+30 | | Gib+30 | | 4 JOURS | | 5 JOURS | |
| | unité | E | T | E | T | E | T | E | T |
| Analyse du malt | | | | | | | | | |
| Extrait | %MS | 80.9 | 80.4 | 80.8 | 80.4 | 80.4 | 79.9 | 81.9 | 80.6 |
| Homogénéité | % | 72 | 65 | 75 | 65 | 84 | 57.0 | 84 | 77 |
| Prot. sol. | % | 4.6 | 4.4 | 4.3 | 4.4 | 4.9 | 4.9 | 5.0 | 5.0 |
| Hartong 45 | % | 38.1 | 35.8 | 36.1 | 35.8 | 43.2 | 42.2 | 46.1 | 42.9 |
| P.D. | WK | 270 | 260 | 230 | 260 | 300 | 290 | 290 | 310 |
| Viscosité | m Pas | 1.50 | 1.59 | 1.49 | 1.59 | 1.46 | 1.52 | 1.46 | 1.50 |
| NDMA | ppb (10⁻⁹) | 1.6 | 0.9 | 1.2 | 0.9 | 0.2 | 0.2 | 0.1 | 0.2 |
| B-glucanes sol. | mg/l | 195 | 240 | 190 | 240 | 100 | 180 | 70 | 130 |
| B-glucanase | U/kg | nd | nd | nd | nd | 357 | 286 | 411 | 355 |
| Endocellulase | mU/g | nd | nd | nd | nd | 499 | 332 | 591 | 415 |
| E: Essai, T: témoin | | | | | | | | | |

### ESSAIS III : MECANISME D'ACTION DE L'ACIDE SUR LE TAUX DE NDMA

### Variétés d'orge :

Des échantillons d'orge germée ont été prélevés à la fin de la phase de germination et avant touraillage (malt verts) dans le cas de l'essai industriel ESSAI 3 du TABLEAU 3 (ALEXIS) et dans le cas des micromaltage VODKA et NOMAD du TABLEAU 2. Dans chacun des cas, à la fois le malt vert témoin sans traitement et le malt issu de la trempe acide ont été récoltés.

### Procédures de maltage:

Les conditions de maltage de ces échantillons sont résumés dans la description des ESSAIS I et II décrits précédemment.

### Analyse des malts verts :

Plusieurs précurseurs potentiels du NDMA ont été analysés à partir des malts verts :
- l'Hordénine et la Gramine d'après une méthode publiée en 1981 par P.T. SLACK et T. WAINWRIGHT dans un article intitulé "Hordenine is the precursor of NDMA in malt" dans JOURNAL INST. BREW., vol.87, p.260.
- la Sarcosine est extraite dans des conditions similaires à l'Hordénine, estérifiée par le Fluorodinitrobenzène (FNNB) et analysé par HPLC.
- le Diméthylamine (DMA) a été extrait au méthanol, dérivatisé au Fluorodinitrobenzène (FDNB) et analysé par HPLC conformément à la méthode publiée en Août 1991 dans VEREIN DEUTSCHER INGENIEURE et intitulé "Determination of aliphatic amines by HPLC".

La teneur des malts verts en NDMA a été déterminée conformément à la méthode décrite dans l'ESSAI I.

Par ailleurs, une étude visuelle des malts verts a été réalisée de manière à estimer l'effet de l'acide sur la croissance des radicelles et des plumules, ces tissus participant majoritairement à la production des amines précurseurs du NDMA.

### RESULTATS :

Les concentrations d'amines secondaires (DMA, Sarcosine) et tertiaires (Hordénine, Gramine) mesurées dans les malts verts récoltés avant touraillage sont exprimées en parties par milliard ppb sur poids sec et représentées dans le tableau 5.

Les chiffres montrent que la Gramine et la Sarcosine sont en quantités très faibles dans le malt vert et que seuls l'Hordénine et le Diméthylamine sont présents en quantités mesurables. Dans le cas du malt industriel, les concentrations de ces deux amines sont 2 à 10 fois plus importantes pour l'Hordénine et le DMA respectivement par rapport à la moyenne des deux micromalts analysés.

Si l'on s'adresse aux concentrations d'hordénine des malts verts, on remarque que la quantité d'hordénine produite au cours de la germination est inférieure de 50% à 100% dans l'échantillon essai acide par rapport au témoin dans le cas des micromalts, et est produite à un niveau identique dans l'échantillon témoin et l'échantillon essai acide dans le cas du malt industriel (ALEXIS).

Dans le cas du DMA, les valeurs sur micromalts et malt industriel sont plus en accord les unes avec l'autre par rapport au cas précédent. Dans tous les cas, la concentration de DMA de l'échantillon d'essai de trempe acide est inférieure d'un facteur de l'ordre de 4 par rapport au témoin. Dans le cas de l'essai NOMADE, les valeurs mesurées montrent que la quantité de DMA du malt vert d'essai de trempe acide est 10 fois inférieure à la quantité mesurée sur le témoin.

L'emploi d'acide à la trempe n'a pas d'incidence significative sur la quantité de NDMA formé au cours de la germination, ni sur la taille des radicelles et des plumules produits pendant la germination du grain.

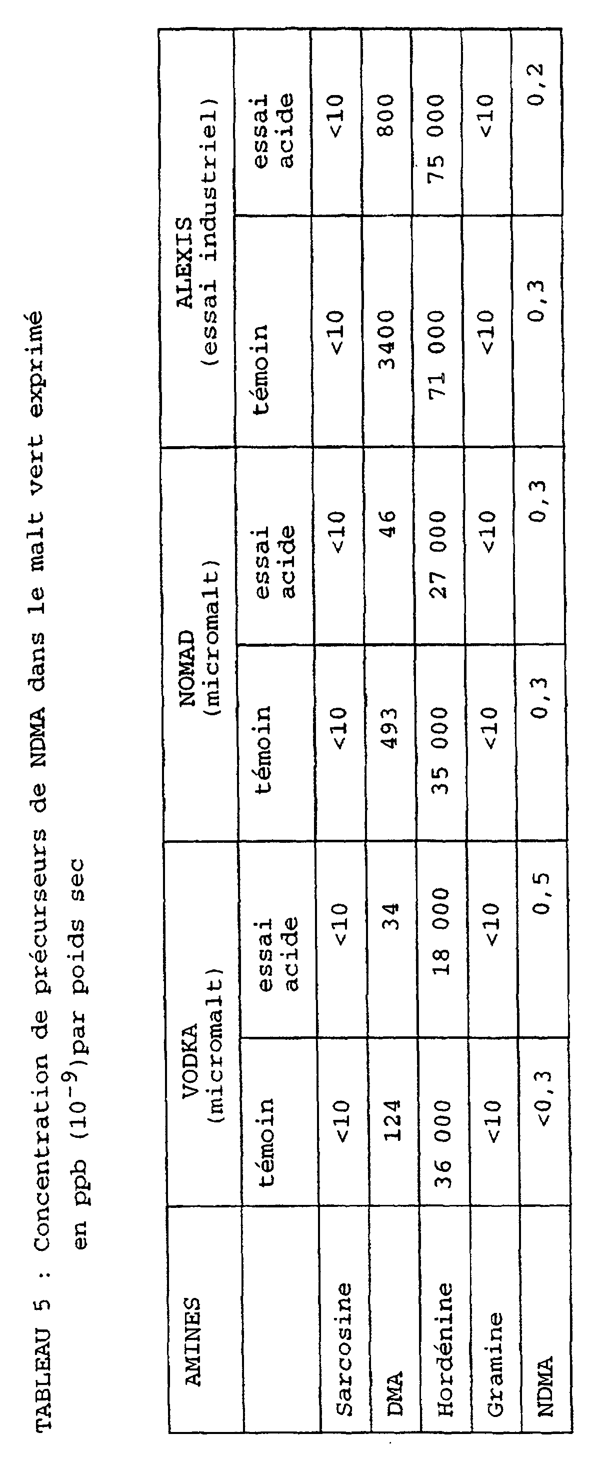

### CONCLUSION:

Cette étude met en évidence le rôle de l'acide utilisé à la trempe sur la quantité de précurseurs de NDMA présents dans le grain en fin de germination

Les valeurs d'amines mesurées dans cette étude montrent que l'addition d'acide à la trempe diminue de manière significative et reproductible la quantité de DMA présent dans le malt vert.

Une plus faible disponibilité dans le malt vert de cette amine secondaire, considéré comme un des précurseurs principaux du NDMA, conduit donc très logiquement à une réduction de la formation de NDMA lors de la nitrosation induite par les NOx au cours du touraillage, ce qui permet la suppression du soufre lors de cette dernière étape de maltage tout en maintenant les normes requises de NDMA.

L'influence de l'acide sur le taux d'Hordénine du malt vert est moins significative et reproductible d'un essai à l'autre, ce qui suggère que la réduction du taux de NDMA par acidification de l'eau de trempe est essentiellement liée à la diminution de DMA du malt vert par ce procédé de maltage.

Ce mécanisme d'action de l'acide se distingue du mécanisme lié à la diminution de croissance des tissus (embryon, radicelles) et de la quantité d'hordénine, cité par WAINWRIGHT et al dans "Nitrosamines in malt and beer" dans JOURNAL INST. BREW. 1986, vol.92, p.76 ; l'addition d'acide à la trempe réalisé selon nos conditions n'a pas d'effet significatif sur la taille des radicelles et des plumules développés au cours du maltage, ni sur la quantité d'hordénine produite.

Parallèlement, des essais complémentaires de maltage destinés à rétablir le taux de protéines légèrement plus faible des essais, permettent de conclure que l'acidification du grain à la trempe entraîne des événements physiologiques conduisant l'obtention de malt de qualité supérieure à celle du témoin. L'adoption d'acide en trempe en conjugaison avec une stimulation sensible du grain en germination permet d'une part de produire des malts à fort extrait et faible viscosité tout en maîtrisant le taux de protéines solubles produit, et d'autre part, l'adoption de ces conditions de maltage permettent également de fabriquer en 4 jours de germination des malts de qualité identique à ceux obtenus en 5 jours de germination dans des conditions standards.

Enfin, l'adoption de ce procédé et les phénomènes physiologiques qu'il engendre entraîne une augmentation de rendement en malterie.

## Revendications

1. Procédé de maltage d'orge, comportant une étape de trempe, une étape de germination et une étape de touraillage, **caractérisé en ce que**, l'étape de trempe comporte au moins une sous-étape de trempe acide s'effectuant à un pH qui, après stabilisation est compris entre 3,5 et 4,6, le rapport entre le volume d'eau de trempe et la quantité d'orge étant choisi pour que l'activité du grain lors de la germination ne soit pas modifiée.

2. Procédé selon la revendication 1, **caractérisé en ce que** ledit pH stabilisé est compris entre 3,8 et 4,6.

3. Procédé selon la revendication 2, **caractérisé en ce qu'**il comporte deux sous-étapes de trempe acide et **en ce que** ledit pH stabilisé est compris entre 3,8 et 4,1 lors de la première sous-étape et entre 3,8 et 4,6 lors de la deuxième sous-étape.

4. Procédé selon une des revendications 1 à 3, **caractérisé en ce qu'**au moins une sous-étape de trempe acide est réalisée avec un rapport de 0,8 à 1,2 litre d'eau de trempe par kg d'orge.

5. Procédé selon la revendication 4,
**caractérisé en ce que** ledit rapport est de 1 litre d'eau de trempe par kg d'orge.

6. Procédé selon une des revendications précédentes, **caractérisé en ce qu'**au moins une sous-étape de trempe a une durée comprise entre 4 et 6 heures.

7. Procédé selon une des revendications précédentes, **caractérisé en ce que** l'acide est ajouté à l'eau de trempe au cours de chacune desdites sous-étapes de trempe.

8. Procédé selon une des revendications 1 à 6, **caractérisé en ce que** l'étape de trempe comporte trois sous-étapes et **en ce que** de l'acide est ajouté à l'eau de trempe au cours de la première et de la deuxième de ces sous-étapes.

9. Procédé selon une des revendications précédentes, **caractérisé en ce que** ladite acidification est réalisée avec de l'acide chlorhydrique.

10. Procédé selon une des revendications 1 à 8, **caractérisé en ce que** ladite acidification est réalisée avec de l'acide phosphorique.

11. Procédé selon une des revendications précédentes, **caractérisé en ce que** l'étape de germination est stimulée de manière à rétablir la valeur du taux de protéines solubles à un niveau sensiblement égal à celui obtenu à partir d'une même variété d'orge obtenue sans trempe acide et soumise à une germination non stimulée.

12. Malt **caractérisé en ce qu'**il présente :
- un extrait compris entre 81 et 82 % de matière sèche ;
- un taux de protéines solubles compris entre 4 et 5% ;
- une viscosité comprise entre 1,4 et 1,5 mPas,
- une homogénéité de modification > 72 % ;
- un taux de NDMA < 10⁻⁹.

13. Malt selon la revendication 12,
**caractérisé en ce qu'**il présente un taux de β-glucanes solubles inférieur à 200 mg/l.

## Claims

1. Method for malting barley, including a steeping step, a germinating step and a kiln drying step, **characterized in that** the steeping step includes at least one acidic steeping substep carried out at a pH which, after stabilization, is between 3.5 and 4.6, the ratio of the volume of steeping water to the amount of barley being chosen so that the activity of the grain during the germination is not modified.

2. Method according to Claim 1, **characterized in that** the said stabilized pH is between 3.8 and 4.6.

3. Method according to Claim 2, **characterized in that** it includes two acidic steeping substeps and **in that** the said stabilized pH is between 3.8 and 4.1 during the first substep and between 3.8 and 4.6 during the second substep.

4. Method according to one of Claims 1 to 3, **characterized in that** at least one acidic steeping substep is carried out with a ratio of 0.8 to 1.2 litres of steeping water per kg of barley.

5. Method according to Claim 4, **characterized in that** the said ratio is 1 litre of steeping water per kg of barley.

6. Method according to one of the preceding claims, **characterized in that** at least one steeping substep has a duration of between 4 and 6 hours.

7. Method according to one of the preceding claims, **characterized in that** the acid is added to the steeping water during each of the said steeping substeps.

8. Method according to one of Claims 1 to 6, **characterized in that** the steeping step includes three substeps and **in that** acid is added to the steeping water during the first and second of these substeps.

9. Method according to one of the preceding claims, **characterized in that** the said acidification is carried out with hydrochloric acid.

10. Method according to one of Claims 1 to 8, **characterized in that** the said acidification is carried out with phosphoric acid.

11. Method according to one of the preceding claims, **characterized in that** the germination step is stimulated so as to re-establish the value of the level of soluble proteins at a level substantially equal to that obtained from the same barley variety obtained without acidic steeping and subjected to a non-stimulated germination.

12. Malt, **characterized in that** it exhibits:
- an extract of between 81 and 82% of dry matter;
- a level of soluble proteins of between 4 and 5%;
- a viscosity of between 1.4 and 1.5 mPa·s,
- a modification homogeneity > 72%;
- an NDMA level < 10⁻⁹ [lacuna].

13. Malt according to Claim 12, **characterized in that** it exhibits a level of soluble β-glucans of less than 200 mg/l.

## Patentansprüche

1. Verfahren zum Mälzen von Gerste, das eine Stufe des Maischens, eine Keimungsstufe und eine Stufe des Darrens umfasst, **dadurch gekennzeichnet, dass** die Stufe des Maischens mindestens eine Unterstufe eines sauren Maischens umfasst, die sich bei einem pH, der nach Stabilisierung zwischen 3,5 und 4,6 liegt, vollzieht, wobei das Verhältnis zwischen dem Wasservolumen der Maische und der Gerstenmenge so gewählt wird, dass die Aktivität des Korns bei der Keimung nicht verändert wird.

2. Verfahren nach Anspruch 1, **dadurch gekennzeichnet, dass** der stabilisierte pH zwischen 3,8 und 4,6 liegt.

3. Verfahren nach Anspruch 2, **dadurch gekennzeichnet, dass** es zwei Stufen eines sauren Maischens umfasst und dass der stabilisierte pH bei der ersten Unterstufe zwischen 3,8 und 4,1 liegt und bei der zweiten Unterstufe zwischen 3,8 und 4,6 liegt.

4. Verfahren nach einem der Ansprüche 1 bis 3, **dadurch gekennzeichnet, dass** mindestens eine Unterstufe des sauren Maischens bei einem Verhältnis von 0,8 bis 1,2 1 Maischewasser pro kg Gerste durchgeführt wird.

5. Verfahren nach Anspruch 4, **dadurch gekennzeichnet, dass** das Verhältnis 1 l Maischewasser pro kg Gerste ist.

6. Verfahren nach einem der vorangehenden Ansprüche, **dadurch gekennzeichnet, dass** mindestens eine Unterstufe des Maischens eine Dauer von 4 bis 6 Stunden hat.

7. Verfahren nach einem der vorangehenden Ansprüche, **dadurch gekennzeichnet, dass** die Säure dem Maischewasser im Verlauf jeder der Unterstufen des Maischens zugesetzt wird.

8. Verfahren nach einem der Ansprüche 1 bis 6, **dadurch gekennzeichnet, dass** die Stufe des Maischens drei Unterstufen umfasst und dass dem Maischewasser Säure im Verlauf der ersten und im Verlauf der zweiten Unterstufe zugesetzt wird.

9. Verfahren nach einem der vorangehenden Ansprüche, **dadurch gekennzeichnet, dass** die Ansäuerung mit Salzsäure durchgeführt wird.

10. Verfahren nach einem der Ansprüche 1 bis 8, **dadurch gekennzeichnet, dass** die Ansäuerung mit Phosphorsäure durchgeführt wird.

11. Verfahren nach einem der vorangehenden Ansprüche, **dadurch gekennzeichnet, dass** die Keimungsstufe so stimuliert wird, dass der Gehalt an löslichen Proteinen wieder auf ein Niveau gebracht wird, das genau dem entspricht, das ausgehend von derselben Gerstenart ohne saures Maischen und nach Unterwerfen einer nicht-stimulierten Keimung erreicht wird.

12. Malz, **dadurch gekennzeichnet, dass** er aufweist:
- einen Extrakt, der zwischen 81 und 82% Trockensubstanz umfasst;
- einen Gehalt an löslichen Proteinen, der zwischen 4 und 5% liegt;
- eine Viskosität, die zwischen 1,4 und 1,5 mPa·s liegt;
- eine Modifikationshomogenität > 72%;
- einen NDMA-Wert < 10⁻⁹.

13. Malz nach Anspruch 12, **dadurch gekennzeichnet, dass** er einen Gehalt an löslichen β-Glucanen von unter 200 mg/l aufweist.
